# EUROPÄISCHE PATENTSCHRIFT

(11) **EP 3 318 518 B1**
(45) Veröffentlichungstag und Bekanntmachung des Hinweises auf die Patenterteilung: **13.02.2019**
(21) Anmeldenummer: 17200350.1
(22) Anmeldetag: 07.11.2017
(51) Int. Cl.: B65G 65/40, B65D 90/58

(54) **AUFGABEVORRICHTUNG FÜR BEHÄLTERVERSCHLÜSSE**
DISPENSING DEVICE FOR CONTAINER CLOSURES
DISPOSITIF D'ALIMENTATION POUR DES FERMETURES DE RÉCIPIENTS

(30) Priorität: 08.11.2016 AT 1650235 U
(43) Veröffentlichungstag der Anmeldung: 09.05.2018
(73) Patentinhaber: Gassner Verwaltungs-GmbH, 5020 Salzburg (AT)
(72) Erfinder: Gaßner, Wolfgang, 4890 Frankenmarkt (AT)
(74) Vertreter: KLIMENT & HENHAPEL

(56) Entgegenhaltungen:
- AU-A- 2 967 477
- US-A- 3 917 091
- US-A- 4 646 942

## Beschreibung

Die vorliegende Erfindung bezieht sich auf eine Vorrichtung zum Aufgeben von Kleinteilen, wie Behälterverschlüssen, auf eine Fördervorrichtung, umfassend zumindest eine Auslassöffnung für Behälterverschlüsse, eine erste Kammer mit einer Einfüllöffnung für Behälterverschlüsse und mit zumindest einer im Betriebszustand der Vorrichtung schräg angeordneten Kammerwand, die ein Rutschen von Behälterverschlüssen zur Auslassöffnung ermöglicht, und zumindest eine zweite Kammer, die über eine zweite Einfüllöffnung befüllbar ist, wobei erste und zweite Kammer bewegliche Sperrmittel besitzen, um den Weg für Behälterverschlüsse zur gemeinsamen Auslassöffnung wahlweise freizugeben oder zu sperren.

Solche Vorrichtungen werden verwendet, um Behälterverschlüsse wie Korken, Stopfen, Kappen, Kronenkorken oder sonstigen Deckel in einer Abfüll- oder Verpackungsanlage auf eine Fördervorrichtung, z.B. auf ein Förderband, aufzubringen. Die Fördervorrichtung fördert die Behälterverschlüsse z.B. zur Verschließmaschine, welche die Behälter dann mit den Behälterverschlüssen verschließt. Die erfindungsgemäße Vorrichtung wird auch als Aufgabebehälter oder Vorratsbehälter bezeichnet und steht meist am Beginn der Förderstrecke. Der Abfüller füllt die zu verarbeitenden Behälterverschlüsse in diesen Aufgabebehälter oder Vorratsbehälter ein. Denkbar ist auch, dass die Vorrichtung Teile von Behälterverschlüssen enthält und diese Teile mit einer Fördervorrichtung zu einer weiteren Bearbeitungsmaschine für Behälterverschlüsse bringt. Oder dass fertige Behälterverschlüsse aus der Vorrichtung nicht zu einer Verschließmaschine, sondern in ein Lager oder einen Zwischenspeicher transportiert werden.

Die erfindungsgemäße Vorrichtung kommt vorteilhaft dann zur Anwendung, wenn der Abfüller die Behälterverschlüsse in Handkartons oder Säcken angeliefert bekommt, und nicht in Großgebinden, wie in Oktabinbehältern oder Gitterboxen. Die Handkartons oder Säcke werden dann von Hand durch das Bedienpersonal durch die Einfüllöffnung in den Aufgabe- oder Vorratsbehälter geschüttet. Für Großgebinde gibt es andere Vorrichtungen zum Aufgeben von Behälterverschlüssen. Es ist jedoch auch denkbar, Großgebinde über eine herkömmliche Ladebrücke oder ein herkömmliches Ladeblech auf eine erfindungsgemäße Vorrichtung aufzusetzen.

Für die Abfüllung von großen Chargen z.B. des gleichen Getränkes mit dem gleichen Verschluss werden meist Großgebinde verwendet. Füllt ein Abfüller kleinere Chargen ab, dann verwendet man eher in Handkartons oder Säcke verpackte Verschlüsse. Manche Abfüller verwenden aber auch aus anderen Gründen bevorzugt Handkartons, etwa weil der Behälterverschluss sehr empfindlich ist, oder aus hygienischen Gründen, oder wenn Großgebinde bei manchen Verschlusslieferanten nicht lieferbar sind.

### STAND DER TECHNIK

Bisherige Aufgabe- oder Vorratsbehälter erfüllten die Anforderungen der Abfüller oft nur unzureichend: Wenn die Charge der Behälterverschlüsse groß ist, soll das Volumen des Vorratsbehälters möglichst groß sein, um möglichst wenig oft nachschütten zu müssen, also um einen geringeren Personalbedarf zu haben. Wenn die Charge klein ist, soll man nicht zu viele Behälterverschlüsse im Vorratsbehälter haben, um beim Sortenwechsel nicht zu viele aus dem Behälter ausräumen zu müssen. Dies kann natürlich durch das Bedienpersonal berücksichtigt werden, wenn dieses weiß, dass bald ein Wechsel der Sorte der Behälterverschlüsse erfolgt. Bei einem Fehler des Bedienpersonals kann es aber sogar zum Einfüllen von falschen Behälterverschlüssen kommen und alle Behälterverschlüsse müssen entfernt werden.

Bisher hatte man für den Wechsel der Verschlusssorte folgende Möglichkeiten:
- Die Kammer des Vorratsbehälters über die zwischen dem Behälter und der Verschließmaschine befindliche Fördervorrichtung leer zu fahren. Meist waren eines oder mehrere der Fördersegmente reversierbar oder die Förderstrecke verzweigte durch eine Weiche. Das funktioniert gut für die im Fördersystem befindlichen Verschlüsse. Das große Volumen des Vorratsbehälters führte aber zu langen Zeiten. Zudem musste oft mehrmals die Tonne für die Behälterverschlüsse gewechselt werden, die dann meist nicht im Raum der Vorratsbehälter (Lagerraum) steht, sondern irgendwo längs der Förderstrecke im Abfüllraum.
- Den Vorratsbehälter verschiebbar (z.B. auf Bockrollen und Schienen) auszuführen, und diesen zum Ablassen der Behälterverschlüsse von der nachgelagerten Fördervorrichtung weg zu rollen.
- Im sogenannten Abgabeschnabel, also bei der Auslassöffnung, des Behälters eine einfache Klappe einzubauen (meist händische Bedienung), um neben dem Abgabeschnabel ein Gefäß unterzustellen. Dort ist es aber bedingt durch die nachgelagerte Fördervorrichtung oft sehr beengt.

Aus der EP 0345480 A2 ist eine Vorrichtung zum Speichern und Aufgeben von Garnspulen bekannt, wobei die Vorrichtung mehrere Behälter aufweist und jeder Behälter eine eigene Auslassöffnung hat, die jeweils mit einer eigenen Klappe verschlossen werden kann.

Aus der US 3730395 A ist eine ziehbare Vorrichtung zur Ausgabe von Samen und Dünger bekannt, wobei Samen und Dünger in eigenen Trichtern angeordnet sind und aus diesen mittels einer Luftströmung in eine Mischkammer geführt werden können. Die Trichter weisen separate Auslassöffnungen auf.

Aus der EP 2809598 A1 ist eine Aufgabeeinrichtung für Einzelteile bekannt, wobei die Einzelteile in einem Trichter gespeichert werden, der eine untenliegende Auslassöffnung aufweist. In einer Ausführungsform können zwei mit 10 mm Abstand zueinander nebeneinander angeordnete Vorrichtungen vorgesehen sein, deren Trichter folglich separate Auslassöffnungen aufweisen.

Aus der US 4 646 942 A ist eine ziehbare Vorrichtung nach dem Oberbegriff des Anspruchs 1, zum Speichern, Transportieren und Auslassen von festen, teilchenförmigen Materialien bekannt. Die Vorrichtung umfasst zwei Kammern, die eine gemeinsame Auslassöffnung aufweisen, wodurch das feste, teilchenförmige Material an einer bestimmten Position ausgebracht werden kann.

### AUFGABE DER ERFINDUNG

Eine Aufgabe der Erfindung ist es daher, eine Vorrichtung (also insbesondere einen Aufgabe- oder Vorratsbehälter) zum Aufgeben von Behälterverschlüssen auf eine Fördervorrichtung zur Verfügung zu stellen, welcher den Wechsel von einer Sorte von Behälterverschlüssen auf eine andere Sorte von Behälterverschlüssen rascher ermöglicht, insbesondere auch parallel zur laufenden Produktion.

### DARSTELLUNG DER ERFINDUNG

Daher ist eine Vorrichtung zum Aufgeben von Kleinteilen, insbesondere Behälterverschlüssen, auf eine Fördervorrichtung, vorgesehen, die Vorrichtung umfassend zumindest eine Auslassöffnung für Behälterverschlüsse, eine erste Kammer mit einer Einfüllöffnung für Behälterverschlüsse und mit zumindest einer im Betriebszustand der Vorrichtung schräg angeordneten Kammerwand, die ein Rutschen von Behälterverschlüssen zur Auslassöffnung ermöglicht, und zumindest eine zweite Kammer, die über eine zweite Einfüllöffnung befüllbar ist, wobei erste und zweite Kammer bewegliche Sperrmittel besitzen, um den Weg für Behälterverschlüsse zur gemeinsamen Auslassöffnung wahlweise freizugeben oder zu sperren.

Es kann daher gleichzeitig pro Kammer eine andere Sorte von Behälterverschlüssen vorrätig gehalten werden. Bei einem Sortenwechsel wird die Kammer mit der vorhergehenden Sorte von Behälterverschlüssen mittels deren Sperrmittel gesperrt und in der Kammer mit der neuen Sorte von Behälterverschlüssen gibt das Sperrmittel den Weg zur Auslassöffnung frei. Wenn mehr als zwei Kammern vorgesehen sind, müsste auch jede dieser weiteren Kammern ein bewegliches Sperrmittel aufweisen.

Damit kann der Sortenwechsel von einer Sorte auf die andere (Umrüstzeit, Rüstzeit) massiv zu beschleunigt bzw. die Zeit dafür verkürzt werden. Wie eingangs erwähnt, kann könnten beide Kammern aus Handkartons oder Säcken händisch befüllt werden. Es könnte aber auch eine Kammer aus Kleingebinden, eben Handkartons oder Säcken, befüllt werden, die andere über entsprechende Ladebrücken oder -bleche aus Großgebinden, oder es könnten beide Kammern aus Großgebinden befüllt werden.

Die Verstellung der Sperrmittel kann händisch, teilautomatisiert (Schützensteuerungen, Bedienpulte mit Druckknöpfen, Touchpanels) oder vollautomatisiert (SPS-Steuerung, Leitrechner) erfolgen. Die Betätigung der Sperrmittel selbst kann im ersten Fall ebenfalls händisch erfolgen, sonst kann dies in allen Fällen durch pneumatische Betätigungselemente, wie Pneumatikzylinder, oder durch Motoren oder durch andere Antriebe erfolgen.

Um die zwei oder mehr Kammern besser entleeren zu können, ist erfindungsgemäß vorgesehen, dass die im Betriebszustand der Vorrichtung schräg angeordnete Kammerwand vor dem Sperrmittel eine verschließbare Öffnung zum Entleeren der ersten bzw. zweiten Kammer aufweist.

Im einfachsten Fall kann das Sperrmittel als Sperrschieber ausgebildet sein. Der Sperrschieber kann z.B. als ebenes Blech ausgeführt sein, das im gesperrten Zustand mit der schräg angeordneten Kammerwand in Eingriff ist uns so die Behälterverschlüsse am Rutschen zur Auslassöffnung hindert.

Dass Sperrmittel kann verschiebbar ausgebildet sein, nämlich zum Sperren von außen durch die im Betriebszustand der Vorrichtung schräg angeordnete Kammerwand in das Innere der ersten bzw. zweiten Kammer verschiebbar sein.

Damit beim Sperren keine Behälterverschlüsse zwischen dem Sperrmittel, also etwa dem Sperrschieber, und der gegenüberliegenden Kammerbegrenzung eingeklemmt werden, kann vorgesehen sein, dass das Sperrmittel im abgesperrten Zustand einen Freiraum offen lässt zu einer Kammerbegrenzung, die der schräg angeordneten Kammerwand gegenüber liegt.

Die verschließbare Öffnung kann etwa als nach außen öffnende Klappe ausgebildet sein. In diesem Fall kann vorgesehen werden, dass die Klappe in der verschlossenen Position verriegelbar ist. Dies hat den ersten Vorteil, dass die Klappe gegen ein unbeabsichtigtes Öffnen der Klappe bei Ausfall oder Druckverlust eines die Klappe positionierenden Pneumatikzylinders gesichert ist. Ein zweiter Vorteil besteht darin, dass die Lage der Klappe im geschlossenen Zustand genau festgelegt werden kann und sich keine Stufe zur nachfolgenden Gleitfläche bildet, welche die Bewegung der Behälterverschlüsse stören könnte.

Mit der verschließbaren Öffnung zum Entleeren kann daher ein rasches, effizientes, hygienisches (keine Berührung der Kammern oder der Behälterverschlüsse durch das Bedienpersonal) und schonendes Entleeren der einzelnen Kammern erfolgen. Die entleerten Behälterverschlüsse können dann sogar wiederverwendet werden.

Der Vorgang des Ablassens alter, nicht mehr benötigter Behälterverschlüsse und des Einfüllens von neuen Behälterverschlüssen für zukünftig zu produzierende Chargen kann parallel zur laufenden Produktion erfolgen, um die durch Rüsten verlorene Anlagenstillstandszeit möglichst auf fast Null zu verkürzen.

Das Verschließen und Öffnen der verschließbaren Öffnung kann wieder händisch, teilautomatisiert (Schützensteuerungen, Bedienpulte mit Druckknöpfen, Touchpanels) oder vollautomatisiert (SPS-Steuerung, Leitrechner) erfolgen. Die Betätigung der Klappen, etc., selbst kann im ersten Fall ebenfalls händisch erfolgen, sonst kann dies in allen Fällen durch pneumatische Betätigungselemente, wie Pneumatikzylinder, oder durch Motoren oder durch andere Antriebe erfolgen.

Denkbar ist auch, dass die Vorrichtung nur eine Kammer aufweist, die jedoch sowohl Sperrmittel als auch vor dem Sperrmittel eine verschließbare Öffnung zum Entleeren dieser Kammer aufweist. Somit könnten auch für diese eine Kammer die Vorteile des einfachen Entleerens durch die verschließbare Öffnung hindurch genutzt werden.

Auch denkbar sind Vorrichtungen, die zwar zwei oder mehrere Kammern haben, aber nicht alle Kammern mit einer verschließbaren Öffnung zum Entleeren versehen sind.

Um das Entleeren der Kammern noch komfortabler zu gestalten, kann unter der verschließbaren Öffnung eine Fördereinrichtung zum Abtransportieren der entleerten Behälterverschlüsse vorgesehen sein. Die Fördereinrichtung kann so ausgebildet sein, dass die bei der Entleerung unten von den Kammern abgegebenen Behälterverschlüsse herausbefördert und in einer komfortablen Höhe wieder abgegeben werden, so dass der Abfüller ein höheres und größeres Gefäß (eventuell auch ein übliches Großgebinde, wie es für Behälterverschlüsse verwendet wird) verwenden kann, in das die Behälterverschlüsse automatisch befördert werden.

Das Volumen der Kammern der Vorrichtung kann unterschiedlich gewählt werden, mit einem großen Einfüllvolumen (Vorratsvolumen) für große Chargen an Behälterverschlüssen, oder mit einem relativ dazu kleinerem Einfüllvolumen (Vorratsvolumen) für kleinere Chargen an Behälterverschlüssen. Die Ausführung der einen oder mehreren schrägen Kammerwände bleibt dabei in der Regel gleich, es werden nur die daran anschließenden, im Betriebszustand meist senkrecht angeordneten Kammerwände entsprechend erhöht bzw. erniedrigt.

Die Einfüllöffnung der Kammern ist in der Regel aus hygienischen Gründen verschließbar, z.B. mittels Schiebetüren.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Ansicht einer erfindungsgemäßen Vorrichtung mit einer Fördereinrichtung für entleerte Behälterverschlüsse
- Fig. 2: eine axonometrische Ansicht einer erfindungsgemäßen Vorrichtung mit einem Bottich für entleerte Behälterverschlüsse
- Fig. 3: das Innere der Vorrichtung gemäß Detail Z aus Fig. 1, mit Sperrschiebern
- Fig. 4: einen Längsschnitt durch die Vorrichtung aus Fig. 1, gemäß Linie A-A aus Fig. 3,
- Fig. 5: ein Detail U aus Fig. 4, betreffend die Verriegelung der Klappe
- Fig. 6: ein Detail aus dem Längsschnitt durch die Vorrichtung aus Fig. 1, gemäß Linie A-A aus Fig. 3, mit geschlossenem Sperrschieber und geschlossener Klappe, mit Behälterverschlüssen
- Fig. 7: wie Fig. 6, jedoch mit geöffneter Klappe

### WEGE ZUR AUSFÜHRUNG DER ERFINDUNG

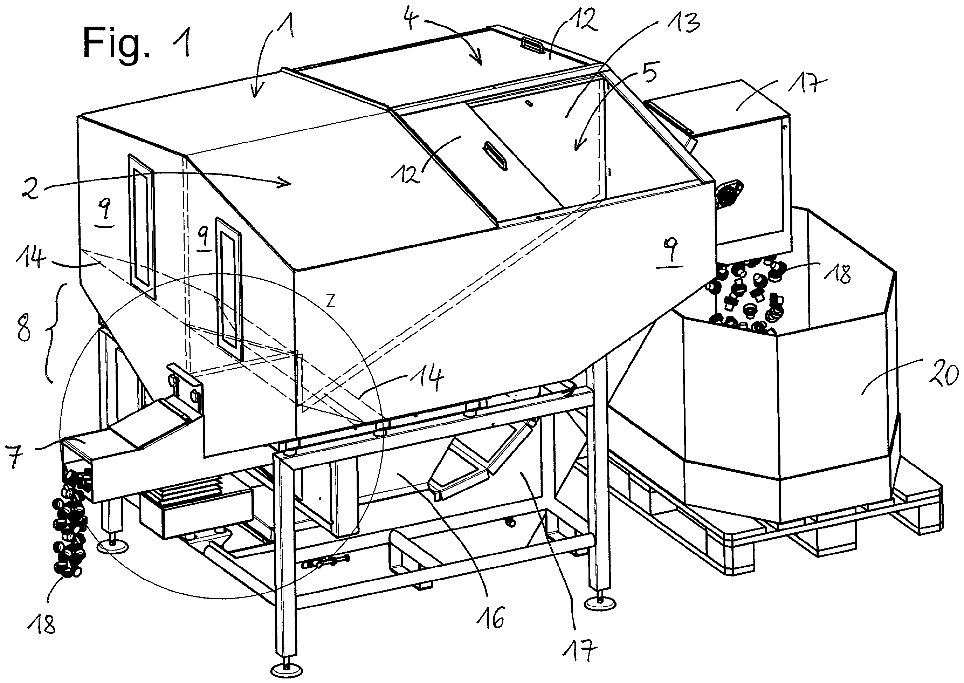

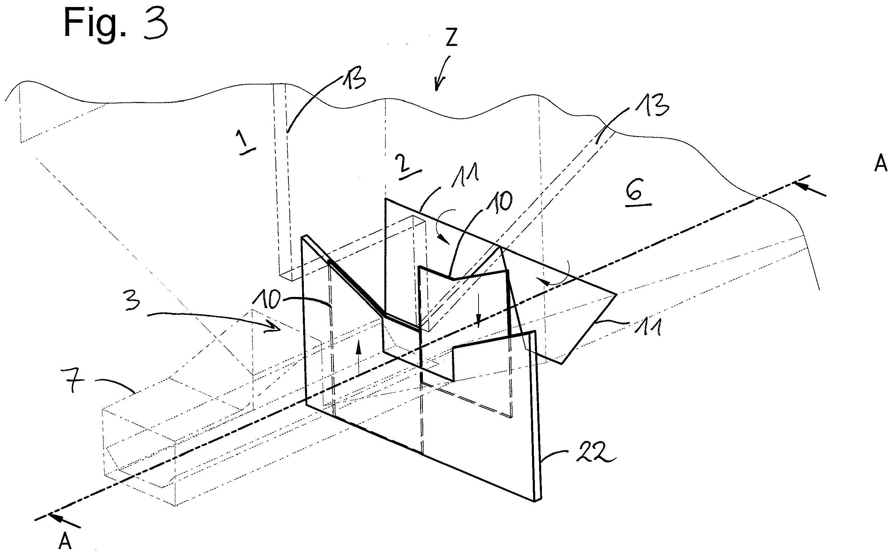

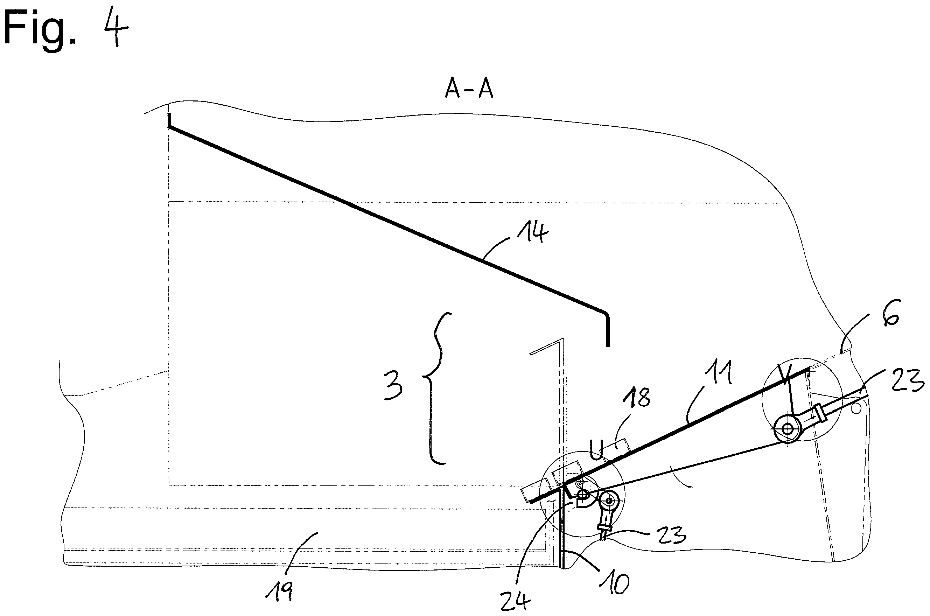

Fig. 1 zeigt eine erfindungsgemäße Vorrichtung zum Aufgeben von Behälterverschlüssen auf eine Fördervorrichtung 7, mit einer Auslassöffnung 3 (siehe Fig. 3) für Behälterverschlüsse 18 und eine erste Kammer 1 und eine zweite Kammer 2. Diese erste und zweite Kammer 1,2 bilden somit einen Aufgabe- oder Vorratsbehälter. Jede der beiden Kammern 1,2 hat eine eigene Einfüllöffnung 4,5 für Behälterverschlüsse 18 und zumindest eine im Betriebszustand der Vorrichtung schräg angeordneten Kammerwand 6 (siehe Fig. 3 und 4), die ein Rutschen von Behälterverschlüssen zur gemeinsamen Auslassöffnung 3 ermöglicht.

Um Behälterverschlüsse aus dem Kammern 1,2 abtransportieren zu können, ist um die noch später beschriebenen Klappen 11 zur Entleerung herum eine trichterartige Verkleidung 16 vorgesehen, die auf eine Fördereinrichtung 17 mündet, welche die Behälterverschlüsse 18 von unterhalb der Kammern 1,2 weg und hinauf in einen eigenen Behälter 20, hier einen Oktabinbehälter, fördert.

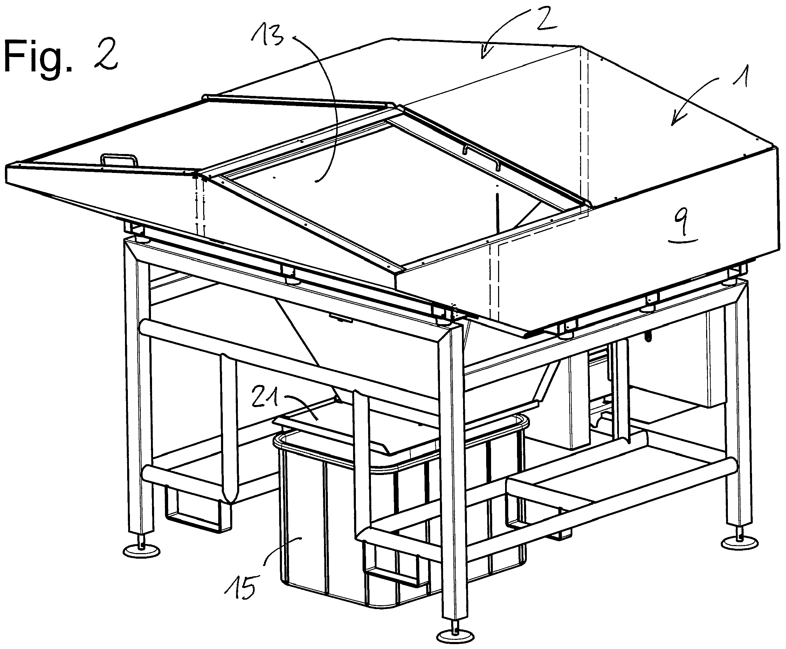

Die Vorrichtung in Fig. 2 ist im Wesentlichen die gleiche wie in Fig. 1, nur ist sie in Fig. 2 von hinten dargestellt und weist keine Fördereinrichtung 17 auf, sondern es ist vorgesehen, dass unter der trichterartigen Verkleidung 16 ein Bottich 15 angeordnet wird, der entleerte Behälterverschlüsse 18 aufnimmt. Damit bei einem allfälligen Wechsel des vollen Bottichs 15 gegen einen leeren Bottich 15 keine Behälterverschlüsse zu Boden fallen, ist zum Verschließen der trichterartigen Verkleidung 16 während des Bottichtauschs ein händisch betätigbarer Schieber 21 vorgesehen.

Ein weiterer Unterschied von Fig. 2 zu Fig. 1 ist, dass die Kammern 1,2 in Fig. 2 niedrigere Seitenwände 9 aufweisen, somit die Kammern 1,2 weniger Volumen haben als jene in Fig. 1. Folglich ist hier auch ein kleinerer Bottich 15 statt eines größeren Behälters 20 ausreichend.

Zum guten Austrag der Behälterverschlüsse 18 nach der Auslassöffnung 3 kann eine, insbesondere horizontal angeordnete, Schwingrinne (Schüttelrutsche) 19 (siehe Fig. 4) gewählt werden. Alternativ könnte aber auch ein Austrags-Förderer gewählt werden (mit glattem Gurtband oder mit geripptem oder mit Stollen versehenem Gurtband) oder alternativen Fördermittel.

Um die Auslassöffnung 3 wird ein die Unterseite des Vorratsbehälters bildender, in drei Richtungen abfallender Trichter 8 angeordnet. Dieser fällt mit einem Winkel ab, der geringfügig höher ist als der für die Überwindung der Haftreibung der Behälterverschlüsse 18 nötige. Das Ziel ist, ein möglichst großes Volumen der Vorrichtung bzw. deren Kammern 1,2 bei niedriger Einfüllkante zu erzielen. Zwei Wände des Trichters 8 werden durch die schräg angeordnete Kammerwand 6 der ersten und zweiten Kammer 1,2 gebildet, wo sich jeweils der Sperrschieber 10 und die Klappe 11 zur Entleerung befinden.

Die Schwingrinne 19 geht ca. mit halber Länge in diesen Trichter 8 hinein (siehe Fig. 4), und ragt ca. mit halber Länge schnabelartig aus diesem heraus. Über dem trichterartigen Boden ragen Seitenwände 9 in Form eines Aufsatz-Kranzes senkrecht empor. Sichtfenster gewähren Einsicht. Nach oben hin wird der Vorratsbehälter durch fixe Abdeckungen und integrierte Schiebetüren 12 (entweder transparent oder Edelstahlblech) abgeschlossen, wobei die Schiebetüren 12 die Einfüllöffnungen 4,5 verschließen. Diese Oberseite ist geschrägt, damit Wasser und Kondensat abfließe kann, und möglichst keine Gegenstände darauf abgestellt werden (sogenanntes "hygienic design").

Die Schwingrinne 19 wird von einem Wurfvibrator in Gang gesetzt. Dieser steht auf einem massiven und schweren Block. Der gesamte Vorratsbehälter und der massive Block ruhen auf einem aus Rundrohren und Formrohren geschweißten Gestell, unter Zwischenschraubung von Gummielementen zur Dämpfung. Gestell und Vorratsbehälter sind weitest möglich nach den Regeln des hygienic Design ausgeführt (horizontale Flächen vermeiden, Rundrohre statt Formrohre, geschrägte Oberseiten, glatte Flächen, nur Edelstahl, keine Höhlungen, etc.).

Der Vorratsbehälter wird durch eine senkrechte Zwischenwand 13 in zwei Hälften getrennt, eben in die beiden Kammern 1,2. Diese Zwischenwand 13 reicht bis hinab in den konischen Trichter 8 bis kurz vor die Einmündung in die Schwingrinne 19. Die Kontur der Zwischenwand 13 ist durch zwei parallele strichlierte Linien dargestellt. An der Vorderseite der Vorrichtung, dort wo die Fördervorrichtung 7 angeordnet ist, verläuft die Zwischenwand 13 entlang der Seitenwand 19 senkrecht nach unten, oberhalb der Auslassöffnung 3 waagrecht nach hinten und dann wieder senkrecht nach unten, und zwar dort, wo sich die Sperrschieber 10 (siehe Fig. 3) befinden. Dann verläuft die Trennwand 13 entlang der schräg angeordneten Kammerwände 6 der beiden Kammern 1,2 schräg nach oben hinten, um die Kammern 1,2 voneinander zu trennen.

Kurz vor der Einmündung der beiden Kammern 1,2 in die Schwingrinne 19 ist in den schräg abfallenden Boden, nämlich in die schräg angeordnete Kammerwand 6, je Kammer 1,2 ein von unten nach oben arbeitender Sperrschieber 10 eingebaut. Dies ist in Fig. 3 dargestellt. Jeder Sperrschieber 10 ist ausgeführt als linear auf-und-ab gleitende Wand aus Blech und wird in einer Führung 22 geführt. Der linke Sperrschieber 10, also jener der Kammer 1, ist in der Stellung "Auslauf bzw. Produktion" nach unten hin abgesenkt. Der Pfeil deutet an, dass dieser nach oben geschoben werden kann. Wichtig ist hier, dass die Behälterverschlüsse 18 beim Darübergleiten nicht behindert werden. Es dürfen durch den Sperrschieber 10 keine Kanten oder Stufen entstehen, sonst stauen sich die Behälterverschlüsse, da die Neigung der schräg angeordneten Kammerwand 6 nur möglichst wenig über dem notwendigen Reibwinkel liegt. Gelöst wird dies derart, dass beim Übergang vom Trichterblech, also dem Blech der Kammerwand 6, auf den Sperrschieber 10 ein leichter Versatz nach unten gebildet wird, und nach dem Sperrschieber 10 eine kleine Fallstrecke zur Schwingrinne 19 hin vorgesehen wird.

In Stellung "Auslauf zu" ist der Sperrschieber 10, also in Fig. 3 der rechte Sperrschieber der Kammer 2, hochgefahren. Der Pfeil deutet an, dass der Sperrschieber nur nach unten gefahren werden kann. Wichtig ist hier, dass beim Hochfahren keine Behälterverschlüsse 18 eingeklemmt werden, die eventuell genau in dem Augenblick darüber gleiten. Dies wurde realisiert, indem der Sperrschieber 10 auch im hochgefahrenen Zustand nach oben hin noch Luft hat und nicht an dem darüber befindlichen Druckentlastungsblech 14 (siehe Fig. 4) anliegt. Das darüber befindliche Druckentlastungsblech 14 reicht von der schnabelseitigen Stirnwand des Vorratsbehälters in den Vorratsbehälter und bildet nach oben hin eine Zwischenwand und beschränkt die Höhe und bildet einen darunter befindlichen Gang für die auslaufenden Behälterverschlüsse 18. Durch diesen Gang läuft nur eine höhenmäßig geringer Strom an Behälterverschlüssen 18. Dadurch muss der Sperrschieber 10 diesen Gang nicht vollständig in der Höhe verschließen. Das Druckentlastungsblech 14 ragt (in Fig. 4 von links nach rechts gesehen) über den Sperrschieber 10 hinaus. Das Druckentlastungsblech 14 ist hier an diesem Ende nach unten abgewinkelt bis etwa auf die Höhe des ausgefahrenen Sperrschiebers 10.

Die Sperrschieber 10 bewirken, dass die zwei Kammern 1,2 wahlweise geöffnet und geschlossen werden können. Man kann z.B. beide Kammern 1,2 mit den gleichen Behälterverschlüssen befüllen und nacheinander ablassen. Oder man kann unterschiedliche Behälterverschlüsse einfüllen, und wahlweise abrufen. Betätigt werden die Sperrschieber 10 durch je einen in Fig. 3 nicht dargestellten Pneumatikzylinder.

Um die beiden Kammern 1,2 besser entleeren zu können, wurde des weiteren in den schräg abfallenden Boden jeder der beiden Kammern (also in die schräg angeordnete Kammerwand 6), unmittelbar vor dem Sperrschieber 10, je eine nach unten hin wegklappende Klappe 11 zur Entleerung eingebaut, ausgeführt als eine auf einer Achse drehbar gelagerte Klappe. In Fig. 3 ist die Klappe 11 in Kammer 1 geschlossen und könnte gemäß Pfeil geöffnet werden, während die Klappe 11 in Kammer 2 geöffnet ist und gemäß Pfeil geschlossen werden könnte.

Die Behälterverschlüsse 18 gleiten in Förderrichtung zuerst über den Bereich der Drehachse und dann über die Klappe 11 bis sie dann am anderen Ende der Klappe 11 zum vorher beschriebenen Sperrschieber 10 gelangen. Dies ist in Fig. 4 darstellt. In durchgezogenen Linien ist die Stellung des Sperrschiebers 10 (geöffnet) und der Klappe 11 (geschlossen) der Kammer 1 aus Fig. 3 dargestellt, wo die Behälterverschlüsse auf die Schwingrinne 19 gelangen können. In Doppelstrich-punktierten Linien ist die Stellung des Sperrschiebers 10 (geschlossen) und der Klappe 11 (geöffnet) der Kammer 2 aus Fig. 3 dargestellt, wo die Behälterverschlüsse durch die Klappe 11 aus der Kammer 2 entfernt werden.

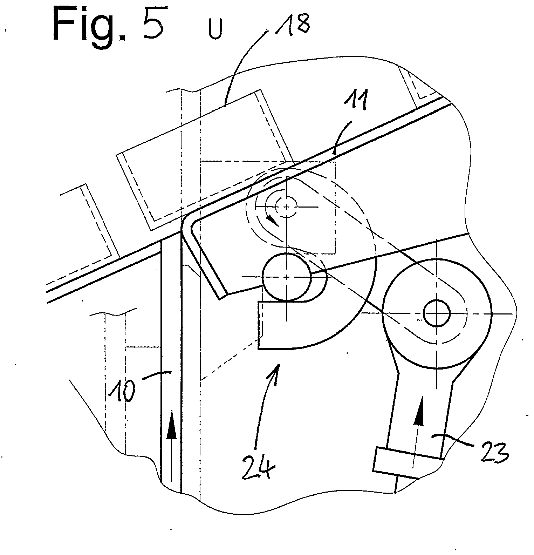

Damit das beim Sperrschieber 10 liegende Ende der Klappe 11 in Stellung "Klappe zu" auch wirklich mit der Kante des Sperrschiebers 10 fluchtet und keine Stufe entsteht, ist die Klappe 11 zusätzlich mit einem Positionier- und Verriegelungsmechanismus 24 ausgestattet, was in den Fig. 4 und 5 dargestellt ist. Sowohl das Bewegen (Schwenken) jeder der beiden Klappen 11, als auch das Verriegeln wird mit je einem eigenen Pneumatikzylinder 23 ausgeführt bzw. angetrieben.

Insgesamt hat man also bei diesem Beispiel sechs Pneumatikzylinder 23.

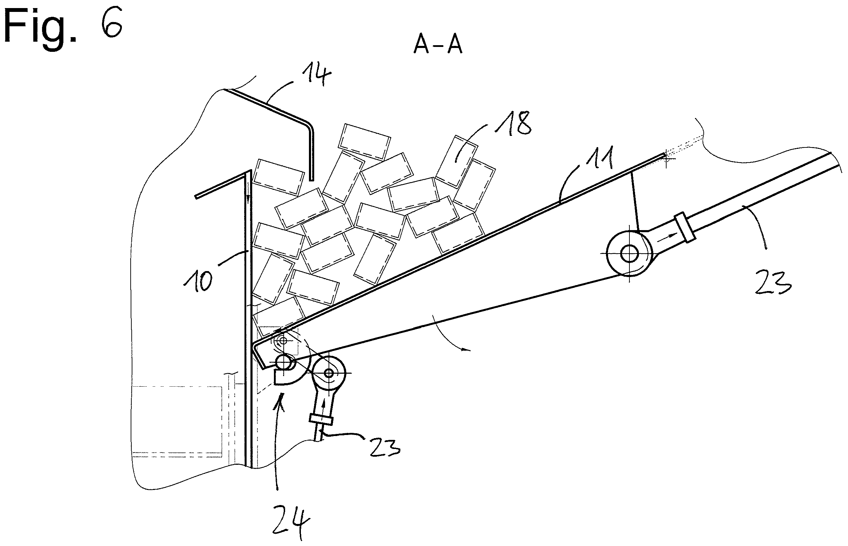

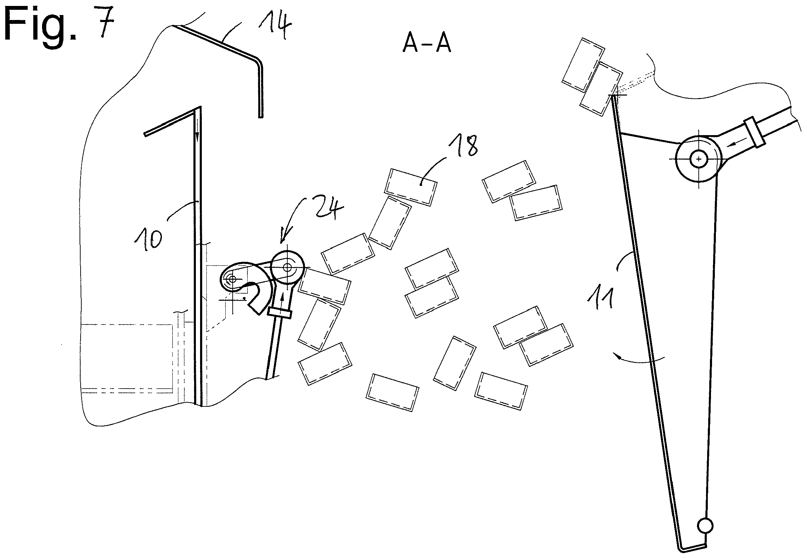

Die Klappe 11 ist im Betriebszustand "Kammer in Produktion bzw. Fördern" in Stellung "Klappe zu". Gleiches gilt für den Betriebszustand "Kammer bereit", welcher Zustand in Fig. 6 dargestellt ist. Hier liegen die Behälterverschlüsse 18 am geschlossenen Sperrschieber 10 an. Im Betriebszustand "Kammer entleeren" ist die Klappe 11 nach unten hin geöffnet (aufgeschwenkt). Vor dem Öffnen der Klappe 11 ist noch der Positionier- und Verriegelungsmechanismus 24 durch den linken Pneumatikzylinder 23 zu öffnen, erst dann kann der rechte Pneumatikzylinder 23 die Klappe 11 öffnen. Dann gleiten die (noch) in der Kammer 1,2 befindlichen Behälterverschlüsse 18 nach unten hin aus dem Vorratsbehälter, wie dies in Fig. 7 dargestellt ist.

Im Normalfall gleiten die Behälterverschlüsse 18 in einen darunter gestellten Bottich 15 (z.B. eine Kunststoffkiste). Der Zwischenraum zwischen dem Bodentrichter 8 des Vorratsbehälters und dem Bottich 15 wird von einer trichterartigen Verkleidung 16 (Blech) umrandet, damit keine Behälterverschlüsse neben den Bottich 15 springen können. Zusätzlich werden dadurch die Pneumatikzylinder 23 und die Klappen 11 und Sperrschieber 10 und Hebel und Führungen etc. vor Zugriff geschützt (keine Gefährdung für das Bedienpersonal).

Dies alles bewirkt, dass man die Kammern 1,2 besser entleeren kann. Es kann sogar die eine Kammer 1 entleert werden, während die andere Kammer 2 Behälterverschlüsse 18 über die Fördervorrichtung 7 an die nachgelagerte Anlage abgibt (Produktion). Um den Entleervorgang noch komfortabler zu machen, kann optional auch noch eine zusätzliche Fördereinrichtung 17, z.B. ein Austrags-Förderband, angebaut sein, welches die bei der Entleerung unten vom Vorratsbehälter abgegebenen Behälterverschlüsse 18 herausbefördert und in einer komfortablen Höhe wieder abgibt, so dass der Anwender ein höheres und größeres Gefäß (eventuell auch ein übliches Großgebinde, wie es für Behälterverschlüsse verwendet wird, siehe Behälter 20 in Fig. 1) verwenden kann, in das die Behälterverschlüsse automatisch befördert werden.

### BEZUGSZEICHENLISTE

- 1: erste Kammer
- 2: zweite Kammer
- 3: Auslassöffnung
- 4: Einfüllöffnung der ersten Kammer 1
- 5: Einfüllöffnung der zweiten Kammer 2 (zweite Einfüllöffnung)
- 6: schräg angeordneten Kammerwand
- 7: Fördervorrichtung
- 8: Trichter
- 9: Seitenwände
- 10: Sperrschieber (Sperrmittel)
- 11: Klappe zur Entleerung
- 12: Schiebetür
- 13: Zwischenwand
- 14: Druckentlastungsblech (Kammerbegrenzung)
- 15: Bottich
- 16: trichterartige Verkleidung
- 17: Fördereinrichtung
- 18: Behälterverschlüsse
- 19: Schwingrinne (Schüttelrutsche)
- 20: Behälter
- 21: Schieber
- 22: Führung für Sperrschieber 10
- 23: Pneumatikzylinder
- 24: Positionier- und Verriegelungsmechanismus

## Patentansprüche

1. Vorrichtung zum Aufgeben von Kleinteilen, wie Behälterverschlüssen (18), auf eine Fördervorrichtung (7), umfassend zumindest eine Auslassöffnung (3) für Behälterverschlüsse, eine erste Kammer (1) mit einer Einfüllöffnung (4) für Behälterverschlüsse und mit zumindest einer im Betriebszustand der Vorrichtung schräg angeordneten Kammerwand (6), die ein Rutschen von Behälterverschlüssen zur Auslassöffnung (3) ermöglicht, und zumindest eine zweite Kammer (2), die über eine zweite Einfüllöffnung (5) befüllbar ist, wobei erste und zweite Kammer bewegliche Sperrmittel (10) besitzen, um den Weg für Behälterverschlüsse zur gemeinsamen Auslassöffnung (3) wahlweise freizugeben oder zu sperren, **dadurch gekennzeichnet, dass** die im Betriebszustand der Vorrichtung schräg angeordnete Kammerwand (6) vor dem Sperrmittel (10) eine verschließbare Öffnung zum Entleeren der ersten bzw. zweiten Kammer (1,2) aufweist.

2. Vorrichtung nach Anspruch 1, **dadurch gekennzeichnet, dass** das Sperrmittel (10) als Sperrschieber ausgebildet ist.

3. Vorrichtung nach Anspruch 1 oder 2, **dadurch gekennzeichnet, dass** das Sperrmittel (10) zum Sperren von außen durch die im Betriebszustand der Vorrichtung schräg angeordnete Kammerwand (6) in das Innere der ersten bzw. zweiten Kammer (1,2) verschiebbar ausgebildet ist.

4. Vorrichtung nach einem der vorhergehenden Ansprüche, **dadurch gekennzeichnet, dass** das Sperrmittel (10) im abgesperrten Zustand einen Freiraum offen lässt zu einer Kammerbegrenzung, die der schräg angeordneten Kammerwand gegenüber liegt.

5. Vorrichtung nach einem der vorhergehenden Ansprüche, **dadurch gekennzeichnet, dass** die verschließbare Öffnung als nach außen öffnende Klappe (11) ausgebildet ist.

6. Vorrichtung nach 5, **dadurch gekennzeichnet, dass** die Klappe (11) in der verschlossenen Position verriegelbar ist.

7. Vorrichtung nach einem der vorhergehenden Ansprüche, **dadurch gekennzeichnet, dass** unter der verschließbaren Öffnung eine Fördereinrichtung (17) zum Abtransportieren der entleerten Behälterverschlüsse vorgesehen ist.

## Claims

1. Device for dispensing small parts, such as container closures (18), onto a conveying device (7), comprising at least one outlet opening (3) for container closures, a first chamber (1) having a filling opening (4) for container closures and at least one chamber wall (6) which is arranged obliquely in the operating state of the device and allows container closures to slide towards the outlet opening (3), and at least one second chamber (2) which can be filled via a second filling opening (5), wherein the first and second chambers comprise movable locking means (10) in order to selectively release or block the path for container closures to the joint outlet opening (3), **characterized in that** the chamber wall (6), which is arranged obliquely in the operating state of the device, has a closable opening in front of the locking means (10) for discharging the first or second chamber (1,2).

2. Device according to claim 1, **characterized in that** the locking means (10) is designed as a locking slide.

3. Device according to claim 1 or 2, **characterized in that** the locking means (10) for locking from the outside is designed to be displaceable into the interior of the first or second chamber (1, 2) through the chamber wall (6) arranged obliquely in the operating state of the device.

4. Device according to one of the preceding claims, **characterized in that** in the locked state the locking means (10) leaves a free space open to a chamber boundary which lies opposite the obliquely arranged chamber wall.

5. Device according to one of the preceding claims, **characterized in that** the closable opening is designed as an outwardly opening flap (11).

6. Device according to 5, **characterized in that** the flap (11) can be locked in the locked position.

7. Device according to one of the preceding claims, **characterized in that** a conveying device (17) for transporting away the emptied container closures is provided below the closable opening.

## Revendications

1. Dispositif pour déposer des petites pièces, telles que des bouchons de contenants (18), sur un dispositif de transport (7), comprenant au moins une ouverture de sortie (3) pour des bouchons de contenants, une première chambre (1) avec une ouverture de remplissage (4) pour des bouchons de contenants et avec au moins une paroi de chambre (6) disposée à l'oblique dans l'état de fonctionnement du dispositif, qui permet aux bouchons de contenants de glisser vers l'ouverture de sortie (3), et au moins une deuxième chambre (2) qui peut être remplie via une deuxième ouverture de remplissage (5), la première chambre et la deuxième possédant des moyens de barrage (10) mobiles pour aux choix libérer ou barrer le passage des bouchons de contenants vers l'ouverture de sortie (3) commune, **caractérisé en ce que** la paroi de chambre (6) de la chambre disposée à l'oblique dans l'état de fonctionnement du dispositif présente avant le moyen de barrage (10) une ouverture pouvant être fermée pour le vidage de la première ou deuxième chambre (1, 2).

2. Dispositif selon la revendication 1, **caractérisé en ce que** le moyen de barrage (10) est conformé comme une vanne à tiroir.

3. Dispositif selon la revendication 1 ou 2, **caractérisé en ce que** le moyen de barrage (10) est conformé de façon coulissante à l'intérieur de la première ou deuxième chambre (1, 2) pour le barrage par l'extérieur à travers la paroi de chambre (6) disposée à l'oblique dans l'état de fonctionnement du dispositif.

4. Dispositif selon l'une des revendications précédentes, **caractérisé en ce que** le moyen de barrage (10) laisse, dans l'état barré, un espace libre ouvert vers une délimitation de la chambre située en face de la paroi de chambre disposée à l'oblique.

5. Dispositif selon l'une des revendications précédentes, **caractérisé en ce que** l'ouverture pouvant être fermée est conformée comme un clapet (11) ouvrant vers l'extérieur.

6. Dispositif selon la revendication 5, **caractérisé en ce que** le clapet (11) peut être verrouillé dans la position fermée.

7. Dispositif selon l'une des revendications précédentes, **caractérisé en ce qu'**une installation de transport (17) est prévue sous l'ouverture pouvant être fermée pour évacuer les bouchons de contenant qui en sortent.
